# EUROPEAN PATENT APPLICATION

(11) **EP 3 554 106 A1**
(43) Date of publication of application: **16.10.2019**
(21) Application number: 16925178.2
(22) Date of filing: 30.12.2016
(51) Int. Cl.: H04W 4/12

(54) **METHOD FOR TRANSMITTING SYSTEM INFORMATION AND TERMINAL DEVICE**

(71) Applicant: Huawei Technologies Co., Ltd., Longgang District Shenzhen, Guangdong 518129 (CN)
(72) Inventor: WANG, Jing, Shenzhen Guangdong 518129 (CN); LIN, Bo, Shenzhen Guangdong 518129 (CN)
(74) Representative: Gill Jennings & Every LLP
(86) International application number: PCT/CN2016/113823
(87) International publication number: WO 2018/120158

(57) **Abstract**

Embodiments of the present invention provide a system information SI transmission method and a terminal device. The method includes: receiving, by a first terminal device, a first message sent by a second terminal device, where the first message is used by the first terminal device to determine whether system information SI needs to be received, and the first terminal device communicates with a base station via the second terminal device; and receiving, by the first terminal device, the SI based on the first message. In the embodiments of the present invention, the first terminal device receives the first message sent by the second terminal device, to determine whether the first terminal device requires the system information SI, thereby preventing the first terminal device from blindingly receiving the system information SI sent by the second terminal device. This reduces signaling exchange between the first terminal device and the second terminal device, reduces signaling overheads, and avoids resource waste.

## Description

### TECHNICAL FIELD

Embodiments of the present invention relate to the communications field, and more specifically, to a system information transmission method and a terminal device.

### BACKGROUND

When accessing a cell, a terminal device needs to receive system information broadcast by a base station in the cell. A terminal device in coverage of the base station may directly receive the system information broadcast by the base station, or may receive the system information forwarded by a relay terminal device in coverage of the base station. A terminal device out of coverage of the base station can receive the system information only by using a relay terminal device in coverage of the base station.

When there is an available relay terminal device near a terminal device, the terminal device can receive system information via the relay terminal device. When the terminal device receives the system information via the relay terminal device, because the terminal device cannot determine when the system information needs to be received, the terminal device blindly receives the system information sent by the relay terminal device. However, the system information or a part of the system information received by the terminal device is not system information required by the terminal device at a current moment. As a result, there is much signaling between the terminal device and the relay terminal device and signaling overheads are relatively high, resulting in unnecessary resource waste.

### SUMMARY

Embodiments of the present invention provide a system information transmission method and a terminal device, to reduce signaling exchange between terminal devices, reduce signaling overheads, and avoid resource waste.

According to a first aspect, a system information transmission method is provided. The method includes: receiving, by a first terminal device, a first message sent by a second terminal device, where the first message is used by the first terminal device to determine whether system information (system information, SI) needs to be received, and the first terminal device communicates with a base station via the second terminal device; and receiving, by the first terminal device, the SI based on the first message.

In this embodiment of the present invention, the first terminal device receives the first message sent by the second terminal device, to determine whether the first terminal device needs to receive the system information SI, so that the first terminal device may receive the system information SI based on the first message. This avoids that because the first terminal device cannot determine when the system information needs to be received, the first terminal device blindingly receives the system information sent by the second terminal device. Therefore, this reduces signaling exchange between the first terminal device and the second terminal device, reduces signaling overheads, and avoids resource waste.

With reference to the first aspect, in a first implementation of the first aspect, the first message includes instruction information instructing the first terminal device to receive the SI.

With reference to the first aspect, in a second implementation of the first aspect, the first message includes information indicating at least one of the following events: the system information changes; an extended access barring (Extended Access Barring, EAB) parameter changes; there is an earthquake and tsunami warning system (Earthquake and Tsunami Warning System, ETWS) primary notification; there is an ETWS secondary notification; there is a commercial mobile alert service (Commercial Mobile Alert Service, CMAS) notification; the second terminal device is performing or has completed cell reselection; the second terminal device is performing or has completed intra-frequency handover; the second terminal device is performing or has completed inter-frequency handover; the second terminal device is performing or has completed inter-RAT handover; and a SIB 1 of system information blocks (System Information Block, SIB) broadcast by the base station changes.

With reference to the first aspect, in a third implementation of the first aspect, the first message is a paging message, and the paging message is at least one of the following paging messages: a paging message indicating that the system information changes; a paging message indicating that an extended access barring EAB parameter changes; a paging message indicating that there is an earthquake and tsunami warning system ETWS primary notification; a paging message indicating that there is an earthquake and tsunami warning system ETWS secondary notification; and a paging message indicating that there is a commercial mobile alert service CMAS notification.

With reference to the first aspect, in a fourth implementation of the first aspect, the first message includes first identification information, and the first identification information is a cell identifier and/or SystemlnfoValueTag.

With reference to the fourth implementation of the first aspect, in a fifth implementation of the first aspect, the method further includes: checking, by the first terminal device, whether the first identification information in the first message and first identification information prestored by the first terminal device are consistent; and if the first identification information in the first message and the first identification information prestored by the first terminal device are inconsistent, receiving, by the first terminal device, the SI.

In this embodiment of the present invention, the first terminal device may check whether the first identification information in the first message and the first identification information prestored by the first terminal device are consistent, to determine whether the first terminal device needs to receive the system information. This reduces signaling exchange between the first terminal device and the second terminal device, reduces signaling overheads, and avoids resource waste.

With reference to any one of the first aspect or the first implementation to the fifth implementation of the first aspect, in a sixth implementation of the first aspect, the receiving, by the first terminal device, the SI based on the first message includes: sending, by the first terminal device, a first request message to the second terminal device based on the first message, where the first request message is used to request the SI; and receiving, by the first terminal device, a first response message sent by the second terminal device, where the first response message includes the SI.

With reference to the sixth implementation of the first aspect, in a seventh implementation of the first aspect, the first request message includes first indication information, and the first indication information indicates a capability supported by the first terminal device or a system information type required by the first terminal device.

In this embodiment of the present invention, the first terminal device sends the first request message including the first indication information to the second terminal, so that the second terminal device may determine, based on the first indication information, the system information SI required by the first terminal device, to prevent the second terminal device from sending system information SI not required by the first terminal device to the first terminal device. This reduces signaling exchange between the first terminal device and the second terminal device, reduces signaling overheads, and avoids resource waste.

With reference to any one of the first aspect or the first implementation to the fifth implementation of the first aspect, in an eighth implementation of the first aspect, if the first terminal device is in coverage of the base station, the receiving, by the first terminal device, the SI includes: receiving, by the first terminal device, the SI broadcast by the base station.

In this embodiment of the present invention, the first terminal device in coverage of the base station may directly receive the system information broadcast by the base station, and the second terminal device does not need to forward the system information. This reduces signaling exchange between the first terminal device and the second terminal device, reduces signaling overheads, and avoids resource waste.

With reference to any one of the first aspect or the first implementation to the eighth implementation of the first aspect, in a ninth implementation of the first aspect, the method further includes: sending, by the first terminal device, coverage status information to the second terminal device, where the coverage status information is used to indicate that the first terminal device is in coverage of the base station, the first terminal device is out of coverage of the base station, or the first terminal device is in extended coverage of the base station.

According to a second aspect, a system information transmission method is provided. The method includes: generating, by a second terminal device, a first message, where the first message is used by a first terminal device to determine whether system information SI needs to be received, and the first terminal device can communicate with a base station via the second terminal device; and sending, by the second terminal device, the first message to the first terminal device.

With reference to the second aspect, in a first implementation of the second aspect, the first message includes instruction information instructing the first terminal device to receive the SI.

With reference to the second aspect, in a second implementation of the second aspect, the first message includes information indicating at least one of the following events: the system information changes; an extended access barring EAB parameter changes; there is an earthquake and tsunami warning system ETWS primary notification; there is an earthquake and tsunami warning system ETWS secondary notification; there is a commercial mobile alert service CMAS notification; the second terminal device is performing or has completed cell reselection; the second terminal device is performing or has completed intra-frequency handover; the second terminal device is performing or has completed inter-frequency handover; the second terminal device is performing or has completed inter-RAT handover; and a system information block SIB 1 broadcast by the base station changes.

With reference to the second aspect, in a third implementation of the second aspect, the first message is a paging message, and the paging message is at least one of the following paging messages: a paging message indicating that the system information changes; a paging message indicating that an extended access barring EAB parameter changes; a paging message indicating that there is an earthquake and tsunami warning system ETWS primary notification; a paging message indicating that there is an earthquake and tsunami warning system ETWS secondary notification; and a paging message indicating that there is a commercial mobile alert service CMAS notification.

With reference to the second aspect, in a fourth implementation of the second aspect, the first message further includes first identification information, and the first identification information is a cell identifier and/or SystemlnfoValueTag.

With reference to the second aspect or the first implementation to the fourth implementation of the second aspect, in a fifth implementation of the second aspect, the method further includes: receiving, by the second terminal device, a first request message sent by the first terminal device, where the first request message is used to request the SI; and sending, by the second terminal device, a first response message to the first terminal device, where the first response message includes the SI.

With reference to the fifth implementation of the second aspect, in a sixth implementation of the second aspect, the first request message includes first indication information, and the first indication information indicates a capability supported by the first terminal device or a system information type required by the first terminal device.

With reference to the second aspect or the first implementation to the sixth implementation of the second aspect, in a seventh implementation of the second aspect, the method further includes: receiving, by the second terminal device, coverage status information sent by the first terminal device, where the coverage status information is used to indicate that the first terminal device is in coverage of the base station, out of coverage of the base station, or in extended coverage of the base station.

According to a third aspect, a terminal device is provided. The terminal device includes one or more modules configured to perform the method according to the first aspect.

According to a fourth aspect, a terminal device is provided. The terminal device includes one or more modules configured to perform the method according to the second aspect.

According to a fifth aspect, a terminal device is provided. The terminal device includes a memory and a processor. The memory is configured to store program code, and the processor is configured to invoke the program code to implement the method according to the first aspect and the implementations of the first aspect.

According to a sixth aspect, a terminal device is provided. The terminal device includes a memory and a processor. The memory is configured to store program code, and the processor is configured to invoke the program code to implement the method according to the second aspect and the implementations of the second aspect.

According to a seventh aspect, a computer-readable medium is provided. The computer-readable medium is configured to store program code that can be executed by the terminal device, and the program code includes an instruction used to perform the method according to the first aspect and the implementations of the first aspect.

According to an eighth aspect, a computer-readable medium is provided. The computer-readable medium is configured to store program code that can be executed by the terminal device, and the program code includes an instruction used to perform the method according to the second aspect and the implementations of the second aspect.

### BRIEF DESCRIPTION OF DRAWINGS

FIG. 1 is a schematic architectural diagram of an application scenario according to an embodiment of the present invention;
FIG. 2 is a schematic flowchart of a system information transmission method according to an embodiment of the present invention;
FIG. 3 is another schematic flowchart of a system information transmission method according to an embodiment of the present invention;
FIG. 4 is still another schematic flowchart of a system information transmission method according to an embodiment of the present invention;
FIG. 5 is still another schematic flowchart of a system information transmission method according to an embodiment of the present invention;
FIG. 6 is still another schematic flowchart of a system information transmission method according to an embodiment of the present invention;
FIG. 7 is a schematic framework diagram of a terminal device according to an embodiment of the present invention;
FIG. 8 is another schematic framework diagram of a terminal device according to an embodiment of the present invention; and
FIG. 9 is still another schematic framework diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention.

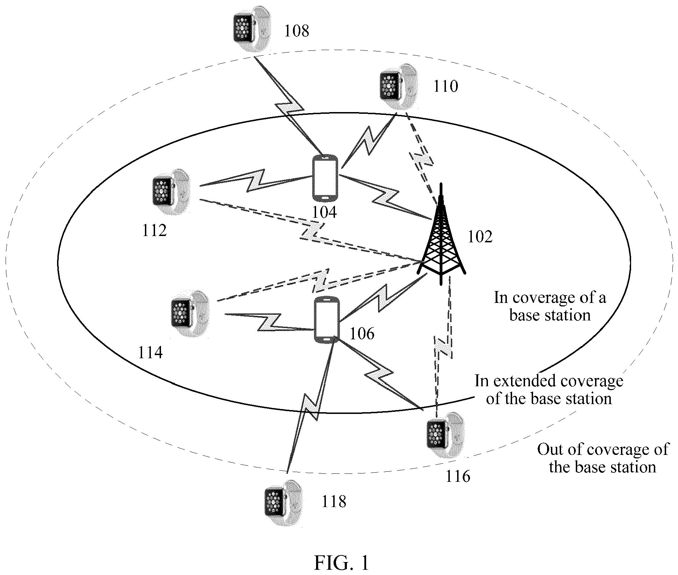

FIG. 1 is a schematic architectural diagram of an application scenario according to an embodiment of the present invention. As shown in FIG. 1, a network 100 may include a base station 102, first terminal devices 108, 110, 112, 114, 116, and 118, and second terminal devices 104 and 106. The base station, the first terminal devices, and the second terminal devices may be wirelessly connected.

When the base station 102 broadcasts system information, the second terminal devices 104 and 106 and the first terminal devices 112 and 114 in coverage (In Coverage, IC) of the base station 102 and the first terminal devices 110 and 116 in extended coverage (Extended Coverage, EC) of the base station 102 may all directly receive the system information broadcast by the base station, and the first terminal devices 112 and 114 in coverage of the base station, the first terminal devices 110 and 116 in extended coverage of the base station, and the first terminal devices 108 and 118 out of coverage (Out of Coverage, OOC) of the base station 102 may use the second terminal device 104 and/or 106 as a relay device to receive the system information broadcast by the base station.

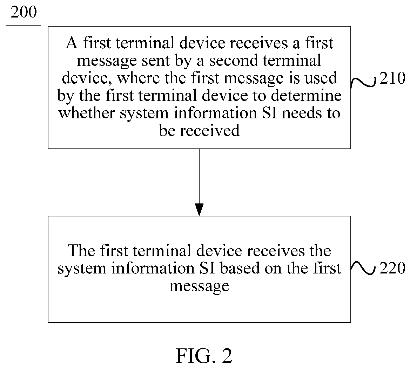

Based on the application scenario shown in FIG. 1, an embodiment of the present invention provides a system information transmission method. A first terminal device receives a first message sent by a second terminal device, so that the first terminal device can determine whether the first terminal device needs to receive system information, thereby preventing the first terminal device from blindingly receiving system information sent by the second terminal device. This reduces signaling exchange between the first terminal device and the second terminal device, reduces signaling overheads, and avoids resource waste. The following describes the method in detail with reference to FIG. 2.

FIG. 2 is a schematic flowchart of a system information transmission method 200 according to an embodiment of the present invention. The method 200 may be performed by a first terminal device, for example, may be performed by the first terminal device 108 or the first terminal device 116 in the network 100 shown in FIG. 1 or another first terminal device in the network 100. The method 200 shown in FIG. 2 includes the following steps.

210: The first terminal device receives a first message sent by a second terminal device, where the first message is used by the first terminal device to determine whether system information (System Information, SI) needs to be received.

220: The first terminal device determines, based on the first message, to receive the system information SI.

In this embodiment of the present invention, the first terminal device receives the first message sent by the second terminal device, to determine whether the first terminal device needs to receive the system information SI, so that the first terminal device may receive the system information SI based on the first message. This avoids that because the first terminal device cannot determine when the system information needs to be received, the first terminal device blindingly receives the system information sent by the second terminal device. Therefore, this reduces signaling exchange between the first terminal device and the second terminal device, reduces signaling overheads, and avoids resource waste.

It should be understood that the SI may be one or more system information blocks (System Information Block, SIB) and/or some or all parameters in one or more SIBs.

Optionally, in some embodiments, the first terminal device may be a wearable device (Wearable Device, WD), for example, may be a terminal device such as a smartwatch or a smart band, and the second terminal device may be a relay terminal device, for example, may be a terminal device such as a smartphone. However, this embodiment of the present invention is not limited thereto.

It should be understood that in this embodiment of the present invention, the first terminal device and the second terminal device establish a communication connection. The communication connection may be, for example, a pairing relationship established based on a Bluetooth technology, may be an association relationship established based on a wireless local area network (Wireless Local Area Networks, WLAN) technology, or may be a connection relationship established based on a device to device technology (Device to Device, D2D) in long term evolution (Long Term Evolution, LTE) technologies.

In this embodiment of the present invention, only the pairing relationship, the association relationship, and the connection relationship are used to describe the communication connection established between the first terminal device and the second terminal device. However, this embodiment of the present invention is not limited thereto.

Optionally, in some embodiments, the first message may include instruction information instructing the first terminal device to receive the SI.

It should be understood that when the first message includes the instruction information instructing the first terminal device to receive the SI, the first terminal device may directly determine, based on the indication information, whether the first terminal device needs to receive the system information SI at a current moment.

Optionally, in some embodiments, the first message may further include information indicating at least one of the following events:
the system information changes;
an extended access barring (Extended Access Barring, EAB) parameter changes;
there is an earthquake and tsunami warning system (Earthquake and Tsunami Warning System, ETWS) primary notification;
there is an ETWS secondary notification;
there is a commercial mobile alert service (Commercial Mobile Alert Service, CMAS) notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

Optionally, in some embodiments, the first message may alternatively be a paging message, and the paging message may be at least one of the following paging messages:
a paging message indicating that the system information changes;
a paging message indicating that an EAB parameter changes;
a paging message indicating that there is an ETWS primary notification;
a paging message indicating that there is an ETWS secondary notification; and
a paging message indicating that there is a CMAS notification.

When the first message includes the information indicating the event or the first message includes the paging message indicating that the system information changes/an EAB parameter changes/there is an ETWS primary notification/there is an ETWS secondary notification/there is a CMAS notification, the first terminal device may indirectly determine, based on the information indicating the event or the paging message, whether the first terminal device receives the system information SI at a current moment.

It should be understood that when the first message includes the information indicating the event, the first terminal device may further indirectly determine, based on the information indicating the event and a capability supported by the first terminal device, whether the first terminal device needs to receive the system information SI at a current moment.

It should be understood that when the first message includes the paging message indicating that the system information changes/an EAB parameter changes/there is an ETWS primary notification/there is an ETWS secondary notification/there is a CMAS notification, the first terminal device may further indirectly determine, based on the paging message and a capability supported by the first terminal device, whether the first terminal device needs to receive the system information SI at a current moment.

Optionally, in some embodiments, the first message may further include first identification information, and the first identification information is a cell identifier and/or SystemInfo ValueTag.

When the first message includes the first identification information, the first terminal device needs to determine whether the first identification information in the first message and first identification information prestored by the first terminal device are consistent, and when the first identification information in the first message and the first identification information prestored by the first terminal device are inconsistent, the first terminal device may determine that the first terminal device needs to receive the system information SI at a current moment.

In 220, the first terminal device receives the SI based on the first message.

When the first message includes the instruction information instructing the first terminal device to receive the SI, the first terminal device may directly determine, based on the first message, whether the first terminal device needs to receive the system information SI at a current moment.

Optionally, in some embodiments, when the first message includes the instruction information instructing the first terminal device to receive the SI, and the first terminal device determines, based on the first message, that the system information SI needs to be received at a current moment, a first terminal device in coverage of the base station receives, by using a transceiver of a cellular network, the system information broadcast by the base station.

It should be understood that the cellular network may use a second-generation telephone communications technology (2-Generation wireless telephone technology, 2G), a third-generation mobile communications technology (3rd-Generation wireless telephone technology, 3G), a fourth-generation mobile communications technology (4th-Generation wireless telephone technology, 4G), or a fifth-generation mobile communications technology (5th-Generation wireless telephone technology, 5G). The 2G network may include global system for mobile communications (Global System for Mobile Communication, GSM), general packet radio service (General Packet Radio Service, GPRS), enhanced data rate for GSM evolution (Enhanced Data Rate for GSM Evolution, EDGE), IS-95, code division multiple access 2000 (Code Division Multiple Access 2000, CDMA 2000), and the like. The 3G network may include wideband code division multiple access (Wideband Code Division Multiple Access, WCDMA), CDMA EV-DO, time division-synchronous code division multiple access (Time Division-Synchronous Code Division Multiple Access, TD-SCDMA), and the like. The 4G network may include LTE, long term evolution-advanced (Long Term Evolution-Advanced, LTE-Advanced), and the like.

It should be understood that this embodiment of the present invention uses the foregoing networks to describe examples of the cellular network. However, this embodiment of the present invention is not limited thereto.

Optionally, in some embodiments, when the first message includes the instruction information instructing the first terminal device to receive the SI, and the first terminal device determines, based on the first message, that the system information SI needs to be received at a current moment, a first terminal device out of coverage of the base station or a first terminal device in extended coverage of the base station may use the second terminal device as a relay device and receive the system information forwarded by the second terminal device.

It should be understood that the first terminal device in extended coverage of the base station may also directly receive the system information SI sent by the base station. However, because signal quality in extended coverage of the base station is relatively poor, the first terminal device within the range needs to repeatedly receive the system information sent by the base station, to correctly receive the system information sent by the base station. However, repeatedly sending the system information to the first terminal device by the base station causes resource waste and does not help the first terminal device save electricity. Therefore, the first terminal device within the range may use the second terminal device as a relay device and receive the system information forwarded by the second terminal device.

Optionally, in some embodiments, when the first message includes the instruction information instructing the first terminal device to receive the SI, and the first terminal device determines, based on the first message, that the system information SI needs to be received at a current moment, a first terminal device in coverage of the base station, out of coverage of the base station, or in extended coverage of the base station may all use the second terminal device as a relay device and receive the system information SI sent by the second terminal device.

When the first message includes the information indicating the event or the first message is the paging message indicating that the system information changes/an EAB parameter changes/there is an ETWS primary notification/there is an ETWS secondary notification/there is a CMAS notification, the first terminal device may indirectly determine, based on the information indicating the event or the paging message, whether the first terminal device receives the system information SI at a current moment.

Optionally, in some embodiments, when the first message includes the information indicating the event or the first message is the paging message indicating that the system information changes/an EAB parameter changes/there is an ETWS primary notification/there is an ETWS secondary notification/there is a CMAS notification, and the first terminal device determines, based on the first message and/or based on a capability supported by the first terminal device, that the system information SI needs to be received at a current moment, the first terminal device in coverage of the base station receives, by using a transceiver of a cellular network, the system information broadcast by the base station.

Optionally, in some embodiments, when the first message includes the information indicating the event or the first message is the paging message indicating that the system information changes/an EAB parameter changes/there is an ETWS primary notification/there is an ETWS secondary notification/there is a CMAS notification, and the first terminal device determines, based on the first message and/or based on a capability supported by the first terminal device, that the system information SI needs to be received at a current moment, a first terminal device in coverage of the base station, out of coverage of the base station, or in extended coverage of the base station may all use the second terminal device as a relay device and receive the system information SI sent by the second terminal device.

When the first message includes the first identification information and the first identification information is a cell identifier and/or SystemInfoValueTag, and the first terminal device determines that the first identification information in the first message and the first identification information prestored by the first terminal device are inconsistent, the first terminal device may indirectly determine that the first terminal device needs to receive the system information at a current moment.

Optionally, in some embodiments, when the first identification information in the first message and the first identification information prestored by the first terminal device are inconsistent, if the first terminal device is in coverage of the base station, the first terminal device receives, by using a transceiver of a cellular network, the system information broadcast by the base station.

Optionally, in some embodiments, when the first identification information in the first message and the first identification information prestored by the first terminal device are inconsistent, a first terminal device in coverage of the base station, out of coverage of the base station, or in extended coverage of the base station may all use the second terminal device as a relay device and receive the system information SI sent by the second terminal device.

When the first terminal device uses the second terminal device as a relay device and receives the system information sent by the second terminal device, the first terminal device may send a first request message to the second terminal device, where the first request message is used to request the system information SI.

Optionally, in some embodiments, the first request message may include first indication information, and the first indication information may be used to indicate a capability supported by the first terminal device or a system information type required by the first terminal device.

Before receiving the system information, the first terminal device may send coverage status information of the first terminal device to the second terminal device. The coverage status information may be used to indicate that the first terminal device is in coverage of the base station, the first terminal device is out of coverage of the base station, or the first terminal device is in extended coverage of the base station.

Optionally, in some embodiments, the first terminal device determines, based on the first message and/or the capability supported by the first terminal device, whether the system information SI needs to be received. The first terminal device may determine that the system information SI does not need to be received in at least one of the following cases:
when the first message is the paging message indicating that an EAB parameter changes or the first message includes the information indicating the event, where the event is that an EAB parameter changes, but the first terminal device does not support an EAB capability;
when the first message is the paging message indicating that there is an ETWS primary notification or there is an ETWS secondary notification, or the first message includes the information indicating the event, where the event is that there is an ETWS primary notification or there is an ETWS secondary notification, but the first terminal device does not support an ETWS capability;
when the first message is the paging message indicating that there is a CMAS notification or the first message includes the information indicating the event, where the event is that there is a CMAS notification, but the first terminal device does not support a CMAS capability; and
when the first message includes the first identification information, and the first identification information in the first message and the first identification information prestored by the first terminal device are consistent.

It should be understood that cases in which the first terminal device determines not to receive the system information SI may not be limited to the foregoing, and this embodiment of the present invention only uses these cases as examples to describe cases in which the first terminal device determines not to receive the system information SI.

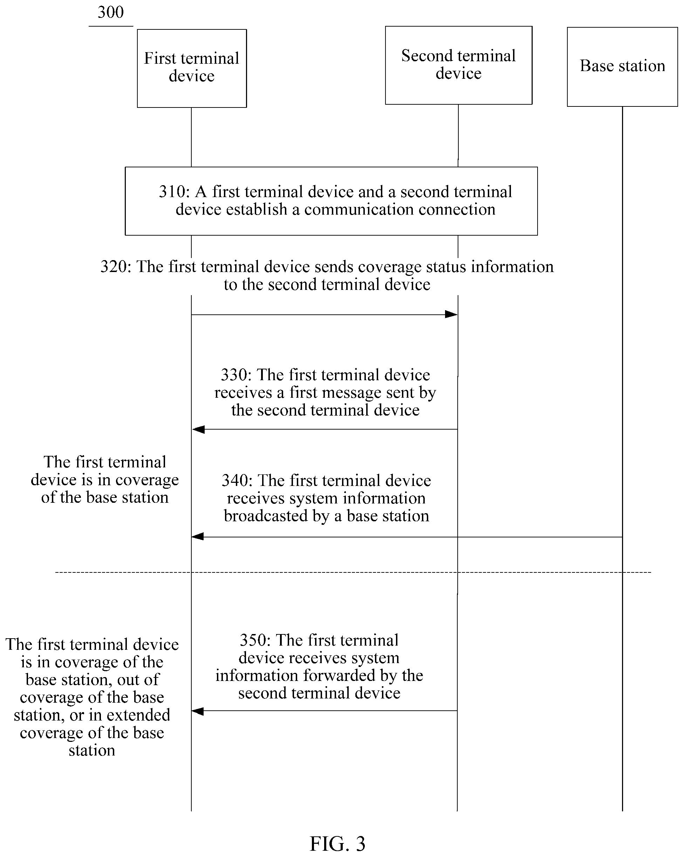

FIG. 3 is a schematic flowchart of a system information transmission method 300 according to an embodiment of the present invention.

310: A first terminal device and a second terminal device establish a communication connection.

It should be understood that in this embodiment of the present invention, the first terminal device and the second terminal device establish the communication connection. The communication connection may be, for example, a pairing relationship established based on a Bluetooth technology, may be an association relationship established based on a WLAN technology, or may be a connection relationship established based on a D2D technology in LTE.

In this embodiment of the present invention, only the pairing relationship, the association relationship, and the connection relationship are used to describe the communication connection established between the first terminal device and the second terminal device. However, this embodiment of the present invention is not limited thereto.

320: The first terminal device sends coverage status information to the second terminal device.

Optionally, in some embodiments, the coverage status information may be used to indicate that the first terminal device is in coverage of a base station, the first terminal device is out of coverage of the base station, or the first terminal device is in extended coverage of the base station.

330: When the first terminal device is in coverage of a base station, the first terminal device receives a first message sent by the second terminal device.

Optionally, in some embodiments, the first message may include instruction information instructing the first terminal device to receive SI.

Optionally, in some embodiments, the first message may further include information indicating at least one of the following events:
the system information changes;
an EAB parameter changes;
there is an ETWS primary notification;
there is an ETWS secondary notification;
there is a CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

Optionally, in some embodiments, the first message may alternatively be a paging message, and the paging message may include at least one of the following paging messages:
a paging message indicating that the system information changes;
a paging message indicating that an EAB parameter changes;
a paging message indicating that there is an ETWS secondary notification;
a paging message indicating that there is an ETWS secondary notification; and
a paging message indicating that there is a CMAS notification.

Optionally, in some embodiments, the first message may further include first identification information, and the first identification information is a cell identifier and/or SystemInfoValueTag.

340: The first terminal device in coverage of the base station receives system information broadcast by the base station.

Optionally, in some embodiments, after the first terminal device sends the coverage status information of the first terminal device to the second terminal device, the second terminal device sends the first message to the first terminal device in coverage of the base station, where the first message may further instruct the first terminal device to receive the system information from the base station.

In this embodiment of the present invention, the first terminal device sends the coverage status information of the first terminal to the second terminal device, so that the second terminal device can determine whether the system information needs to be forwarded to the first terminal device at a current moment. For example, when the first terminal device is in coverage of the base station, the second terminal device may not need to forward the system information to the first terminal device at the current moment, and instruct, by using the first message, the first terminal device to directly receive the system information from the base station. This reduces signaling exchange between the first terminal device and the second terminal device, reduces signaling overheads, and avoids resource waste.

350: The first terminal device receives system information forwarded by the second terminal device.

It should be understood that the first terminal device may be only a first terminal device out of coverage of the base station or in extended coverage of the base station, or may be all first terminal devices in coverage of the base station, out of coverage of the base station, or in extended coverage of the base station.

To be specific, a first terminal device out of coverage of the base station or in extended coverage of the base station may use the second terminal device as a relay device and send the first message to the second terminal device, or all first terminal devices use the second terminal device as a relay device and send a first request message to the second terminal device.

In step 350, the first terminal device may not receive the first message sent by the second terminal device. When needing to send the system information to the first terminal device under trigger by some events, the second terminal device may directly send the system information to the first terminal device. The first terminal device may be all first terminal devices in coverage of the base station, out of coverage of the base station, or in extended coverage of the base station, or may be only a first terminal device out of coverage of the base station or in extended coverage of the base station.

Optionally, in some embodiments, an event triggering the second terminal device to send the system information to the first terminal device may be at least one of the following events:
the system information changes;
an EAB parameter changes;
there is an ETWS primary notification;
there is an ETWS secondary notification;
there is a CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

For example, when the second terminal device receives the paging message indicating that the system information changes, after the second terminal device receives updated system information broadcast in a cell, all first terminal devices may receive other system information than a MIB, a SIB 1, a SIB 10, a SIB 11, a SIB 12, and a SIB 14 that is sent by the second terminal device or other system information than a MIB, a SIB 1, a SIB 10, a SIB 11, a SIB 12, and a SIB 14 that is required by the first terminal device.

It should be understood that the base station may indicate, by using the paging message, that other system information than the MIB, the SIB 1, the SIB 10, the SIB 11, the SIB 12, and the SIB 14 in a system message all changes.

The base station may further modify a value of SystemInfoValueTag in the SIB 1 to indicate that the other system information than the MIB, the SIB 1, the SIB 10, the SIB 11, the SIB 12, and the SIB 14 in the system message changes. The value of SystemInfoValueTag is used to indicate whether the system information changes, and the value of SystemInfoValueTag ranges from 0 to 31. When the system information changes, the value of SystemInfoValueTag is increased by 1. Therefore, it may be detected whether the value of SystemInfoValueTag changes, to learn whether the system information changes.

For another example, when the first terminal device is a terminal device supporting an EAB capability, and the second terminal device receives the paging message indicating that an EAB parameter changes, all first terminal devices supporting the EAB capability receive the SIB 14 sent by the second terminal device. When the second terminal device receives the paging message indicating that there is an ETWS primary notification and/or secondary notification, all first terminal devices supporting an ETWS capability receive the SIB 10 and/or the SIB 11 sent by the second terminal device. When the second terminal device receives the paging message indicating that there is a CMAS notification, all first terminal devices supporting a CMAS capability receive the SIB 12 sent by the second terminal device.

It should be understood that when the second terminal device receives the paging message indicating that an EAB parameter changes, the second terminal device first needs to receive the SIB 1 broadcast by the base station, checks a scheduling information list field (Scheduling InfoList) in the SIB 1, and determines whether the scheduling information list field includes the SIB 14. When the scheduling information list field includes the SIB 14, the second terminal device receives the SIB 14 based on scheduling information and sends an updated SIB 14 to the first terminal device.

It should be understood that when the second terminal device receives the paging message indicating that there is an ETWS primary notification (Primary Notification), the second terminal device first receives the SIB 1, detects a scheduling information list field in the SIB 1, and determines whether the scheduling information list field indicates that there is the SIB 10. If the scheduling information list field indicates that there is the SIB 10, the second terminal device receives the SIB 10 based on scheduling information and sends the SIB 10 to the first terminal device.

Similarly, when the second terminal device receives the paging message indicating that there is an ETWS secondary notification (Secondary Notification), the second terminal device first receives the SIB 1, detects a scheduling information list (Scheduling InfoList) field in the SIB 1, and determines whether the scheduling information list field indicates that there is the SIB 11. If the scheduling information list field indicates that there is the SIB 11, the second terminal device receives the SIB 11 based on scheduling information and sends the SIB 11 to the first terminal device.

Similarly, when the second terminal device receives the paging message indicating that there is a CMAS notification, the second terminal device first receives the SIB 1, detects a scheduling information list field in the SIB 1, and determines whether the scheduling information list field indicates that there is the SIB 12. If the scheduling information list field indicates that there is the SIB 12, the second terminal device receives the SIB 12 based on scheduling information and sends the SIB 12 to the first terminal device.

For another example, after the first terminal device and the second terminal device establish a communication connection, the first terminal device sends target SI to the second terminal device, where the target SI is all of SI required by the second terminal device.

For still another example, when the second terminal device performs cell reselection, intra-frequency handover, inter-frequency handover, and inter-RAT handover, after the second terminal device receives system information SI of a target cell after cell reselection, intra-frequency handover, inter-frequency handover, and inter-RAT handover, all first terminal devices receive all system information sent by the second terminal device or receive all system information that is sent by the second terminal device and that is required by the first terminal.

For still another example, when the second terminal device detects that the SIB 1 changes, after the second terminal device receives updated system information broadcast by the cell, all first terminal devices receive an updated SIB 1 sent by the second terminal device or a parameter required by the second terminal device in an updated SIB 1.

Alternatively, when the second terminal device detects that a parameter required by the first terminal device in the SIB 1 changes, after the second terminal device receives updated system information broadcast by the cell, the second terminal device sends an updated SIB 1 or a parameter required by the first terminal device in an updated SIB 1 to the first terminal device.

It should be understood that the first terminal device may detect the MIB or the SIB 1 broadcast by the base station, to determine whether the MIB and the SIB 1 in the system information change.

Optionally, in some embodiments, the first terminal device may be a wearable device WD, for example, may be a terminal device such as a smartwatch or a smart band, and the second terminal device may be a relay terminal device, for example, may be a terminal device such as a smartphone. However, this embodiment of the present invention is not limited thereto.

In this embodiment of the present invention, the first terminal device may determine, by using the first message, whether the first terminal device needs to receive the system information, thereby preventing the first terminal device from blindingly receiving the system information. This reduces signaling exchange between the first terminal device and the second terminal device, reduces signaling overheads, and avoids resource waste.

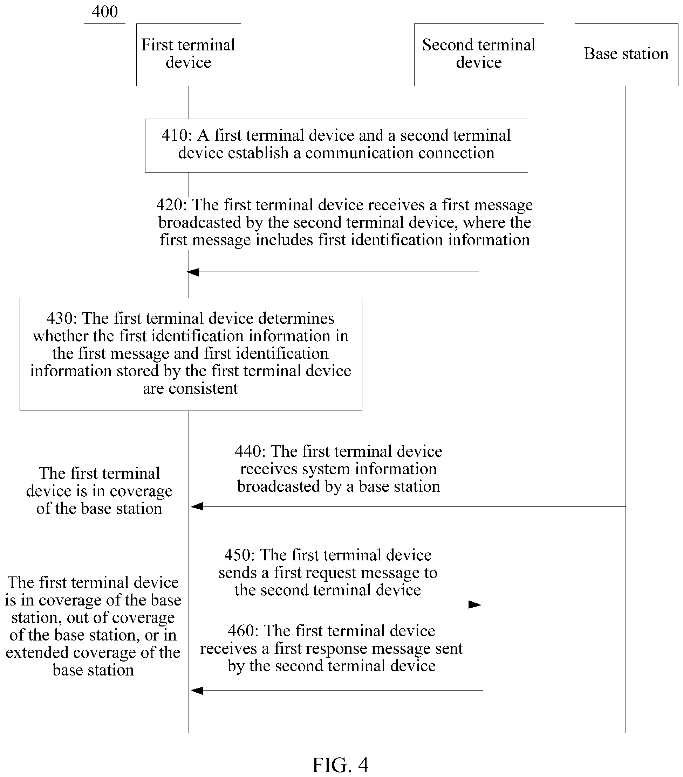

FIG. 4 is a schematic flowchart of a system information transmission method 400 according to an embodiment of the present invention.

410: A first terminal device and a second terminal device establish a communication connection.

It should be understood that in this embodiment of the present invention, the first terminal device and the second terminal device establish the communication connection. The communication connection may be, for example, a pairing relationship established based on a Bluetooth technology, may be an association relationship established based on a WLAN technology, or may be a connection relationship established based on a D2D technology in LTE.

In this embodiment of the present invention, only the pairing relationship, the association relationship, and the connection relationship are used to describe the communication connection established between the first terminal device and the second terminal device. However, this embodiment of the present invention is not limited thereto.

420: The first terminal device receives a first message sent by the second terminal device.

It should be understood that the first terminal device receiving the first message sent by the second terminal device may be all first terminal devices.

Optionally, in some embodiments, the first message includes first identification information, and the first identification information is a cell identifier of a cell in which the second terminal device is located and/or SystemlnfoValueTag.

Optionally, in some embodiments, the second terminal device sends the first message in a broadcast manner. For example, when a D2D connection is used between the first terminal device and the second terminal device, the second terminal device may use the cell identifier and/or SystemInfoValueTag as partial content of search information (discovery message) broadcast by the second terminal device or partial content of a master information block-SL message broadcast by the second terminal device.

Optionally, in some embodiments, when sending the first message in a broadcast manner, the second terminal device may broadcast a SIB 1 because the SIB 1 includes the cell identifier and SystemInfoValueTag.

430: The first terminal device determines whether first identification information in the first message and first identification information prestored by the first terminal device are consistent.

Because the first identification information is the cell identifier and/or SystemlnfoValueTag, when the first terminal device determines whether the first identification information in the first message and the first identification information prestored by the first terminal device are consistent, the first terminal device may respectively compare the cell identifier or SystemInfoValueTag or the cell identifier and SystemInfoValueTag with corresponding information prestored by the first terminal device.

Optionally, in some embodiments, if the cell identifier in the first message and a cell identifier prestored by the first terminal device are inconsistent, it indicates that the first terminal device and the second terminal device are not in a same cell at a current moment, or the first terminal device and the second terminal device enter another cell. In this case, the first terminal device needs to receive system information SI.

Optionally, in some embodiments, if the cell identifier and SystemInfoValueTag in the first message and a cell identifier and SystemInfoValueTag prestored by the first terminal device are both inconsistent, it indicates that the first terminal device and the second terminal device are not in a same cell, or the first terminal device and the second terminal device enter another cell. In this case, the first terminal device needs to receive system information SI.

Optionally, in some embodiments, if SystemInfoValueTag in the first message and SystemInfoValueTag prestored by the first terminal device are inconsistent, it indicates that system information stored by the first terminal device is not in a latest version, that is, the system information already changes. In this case, the first terminal device needs to receive system information SI.

440: When the first terminal device is a terminal device in coverage of a base station, the first terminal device receives system information broadcast by the base station.

Because the terminal device in coverage of the base station may directly receive the system information broadcast by the base station, after the first terminal device receives the first identification information broadcast by the second terminal device, a first terminal device in coverage of the base station may receive, by using a transceiver of a cellular network, the system information broadcast by the base station. For example, when the transceiver of the cellular network is turned off, the first terminal device turns on the transceiver of the cellular network to receive the system information broadcast by the base station.

450: The first terminal device sends a first request message to the second terminal device.

It should be understood that the first terminal device may be only a first terminal device out of coverage of the base station or in extended coverage of the base station, or may be all first terminal devices in coverage of the base station, out of coverage of the base station, or in extended coverage of the base station.

To be specific, a first terminal device out of coverage of the base station or in extended coverage of the base station may use the second terminal device as a relay device and send the first message to the second terminal device, or all first terminal devices use the second terminal device as a relay device and send a first request message to the second terminal device.

Optionally, in some embodiments, the first request message may include first indication information, and the first indication information is used to indicate a capability supported by the first terminal device or a system information type required by the first terminal device.

460: The first terminal device receives a first response message sent by the second terminal device.

It should be understood that the first terminal device may alternatively be all first terminal devices in coverage of the base station, out of coverage of the base station, or in extended coverage of the base station.

Optionally, in some embodiments, the second terminal device may determine, based on the first indication information in the first request message, system information required by the first terminal device, and send the first response message to the first terminal device. The first response message includes the system information SI that is required by the first terminal device and that is determined by the second terminal device based on the first indication information.

Optionally, in some embodiments, the second terminal device may send, under trigger by some events to the first terminal device, the first response message including the system information required by the first terminal device. The events that trigger the second terminal device to send the first response message to the first terminal device may be at least one of the following events:
the system information changes;
an EAB parameter changes;
there is an ETWS primary notification;
there is an ETWS secondary notification;
there is a CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

Optionally, in some embodiments, the first terminal device may be a wearable device WD, for example, may be a terminal device such as a smartwatch or a smart band, and the second terminal device may be a relay terminal device, for example, may be a terminal device such as a smartphone. However, this embodiment of the present invention is not limited thereto.

In this embodiment of the present invention, the first terminal device receives the first identification information broadcast by the second terminal device, and compares the first identification information with the first identification information stored by the first terminal device, to determine whether the first terminal device needs to receive the system information, thereby preventing the first terminal device from blindingly receiving the system information. This reduces signaling exchange between the first terminal device and the second terminal device, reduces signaling overheads, and avoids resource waste.

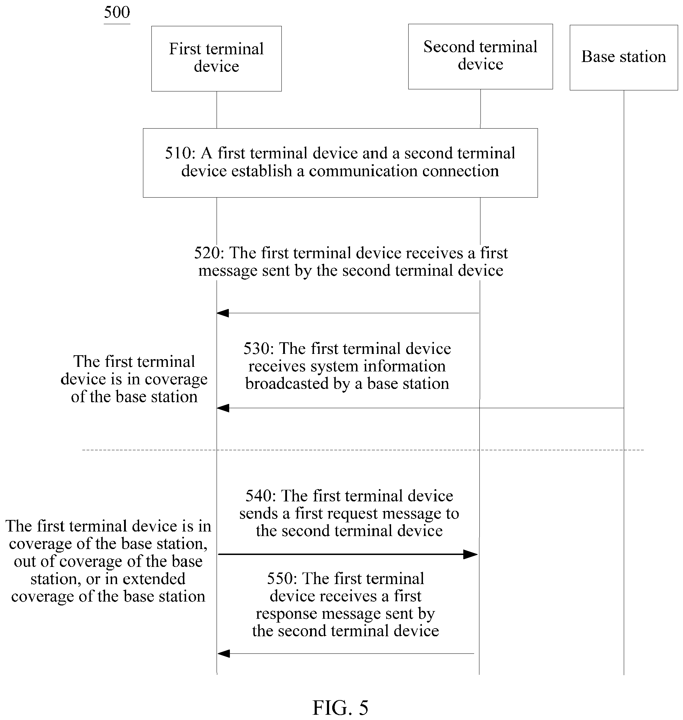

FIG. 5 is a schematic flowchart of a system information transmission method 500 according to an embodiment of the present invention.

510: A first terminal device and a second terminal device establish a communication connection.

It should be understood that in this embodiment of the present invention, the first terminal device and the second terminal device establish the communication connection. The communication connection may be, for example, a pairing relationship established based on a Bluetooth technology, may be an association relationship established based on a WLAN technology, or may be a connection relationship established based on a D2D technology in LTE.

In this embodiment of the present invention, only the pairing relationship, the association relationship, and the connection relationship are used to describe the communication connection established between the first terminal device and the second terminal device. However, this embodiment of the present invention is not limited thereto.

520: The first terminal device receives a first message sent by the second terminal device.

Optionally, in some embodiments, the first message may include instruction information instructing the first terminal device to receive SI.

Optionally, in some embodiments, the first message may further include information indicating at least one of the following events:
the system information changes;
an EAB parameter changes;
there is an ETWS primary notification;
there is an ETWS secondary notification;
there is a CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

Optionally, in some embodiments, the first message may alternatively be a paging message, and the paging message may include at least one of the following paging messages:
a paging message indicating that the system information changes;
a paging message indicating that an EAB parameter changes;
a paging message indicating that there is an ETWS primary notification;
a paging message indicating that there is an ETWS secondary notification; and
a paging message indicating that there is a CMAS notification.

Optionally, in some embodiments, the first message may further include first identification information, and the first identification information is a cell identifier and/or SystemInfoValueTag.

Optionally, in some embodiments, the first message may further carry a reason for which the first terminal device is instructed to receive the SI.

The reason for which the first terminal device is instructed to receive the SI may be at least one of the following reasons:
the system information changes;
an EAB parameter changes;
there is an ETWS primary notification;
there is an ETWS secondary notification;
there is a CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

530: When the first terminal device is a terminal device in coverage of a base station, the first terminal device receives system information broadcast by the base station.

540: The first terminal device sends a first request message to the second terminal device.

It should be understood that the first terminal device may be all first terminal devices in coverage of the base station, out of coverage of the base station, or in extended coverage of the base station.

That is, all the first terminal devices may send the first request message to the second terminal device, to request the second terminal device to forward the system information.

Optionally, in some embodiments, the first request message may include first indication information, and the first indication information is used to indicate a capability supported by the first terminal device or a system information type required by the first terminal device.

Optionally, in some embodiments, the first request message may further carry system information that is required by the first terminal device and that is determined by the first terminal device based on the reason for which the first terminal device is instructed to receive the SI and/or the capability supported by the first terminal device.

That is, the first terminal device may directly notify the second terminal device of the system information required by the first terminal device, and request the second terminal device to send the corresponding system information to the first terminal device.

550: The first terminal device receives a first response message sent by the second terminal device.

It should be understood that the first terminal device may be only a first terminal device out of coverage of the base station or in extended coverage of the base station, or may be all first terminal devices in coverage of the base station, out of coverage of the base station, or in extended coverage of the base station.

To be specific, a first terminal device out of coverage of the base station or in extended coverage of the base station may use the second terminal device as a relay device and send the first message to the second terminal device, or all first terminal devices use the second terminal device as a relay device and send a first request message to the second terminal device.

Optionally, in some embodiments, the second terminal device may send the first response message to the first terminal device based on the system information type that is required by the first terminal device and that is carried in the first request message, where the first response message includes the corresponding system information required by the first terminal device.

For example, when the reason for which the first terminal device is instructed to receive the SI is the paging message indicating that there is an ETWS primary notification, a first terminal device supporting an ETWS capability may send the first request message to the second terminal device. The first request message is used to request the second terminal device to forward a SIB 10. When receiving the first request message, the second terminal device sends a first response message including the SIB 10 to the first terminal device.

Optionally, in some embodiments, the first terminal device determines, based on the first message and/or the capability supported by the first terminal device, whether the system information SI needs to be received. The first terminal device may determine that the system information SI does not need to be received in at least one of the following cases:
when the first message is the paging message indicating that an EAB parameter changes or the first message includes the information indicating the event, where the event is that an EAB parameter changes, or the reason that is carried in the first message and for which the first terminal device is instructed to receive the SI is that an EAB parameter changes, but the first terminal device does not support an EAB capability;
when the first message is the paging message indicating that there is an ETWS primary notification and/or there is an ETWS secondary notification, or the first message includes the information indicating the event, where the event is that there is an ETWS primary notification and/or there is an ETWS secondary notification, or the reason that is carried in the first message and for which the first terminal device is instructed to receive the SI is that there is an ETWS primary notification and/or there is an ETWS secondary notification, but the first terminal device does not support an ETWS capability;
when the first message is the paging message indicating that there is a CMAS notification or the first message includes the information indicating the event, where the event is that there is a CMAS notification, or the reason that is carried in the first message and for which the first terminal device is instructed to receive the SI is that there is a CMAS notification, but the first terminal device does not support a CMAS capability; and
when the first message includes the first identification information, and the first identification information in the first message and the first identification information prestored by the first terminal device are consistent.

It should be understood that cases in which the first terminal device determines not to receive the system information SI may not be limited to the foregoing, and this embodiment of the present invention only uses these cases as examples to describe cases in which the first terminal device determines not to receive the system information SI.

Optionally, in some embodiments, the first terminal device may be a wearable device WD, for example, may be a terminal device such as a smartwatch or a smart band, and the second terminal device may be a relay terminal device, for example, may be a terminal device such as a smartphone. However, this embodiment of the present invention is not limited thereto.

In this embodiment of the present invention, the first terminal device may receive the first message, to determine whether the first terminal device needs to receive the system information. The first message may further carry the reason for which the first terminal device is instructed to receive the SI. The first terminal device may request, based on the reason for which the first terminal device is instructed to receive the SI and/or the capability supported by the first terminal device, the second terminal device to send the corresponding system information, thereby preventing the first terminal device from blindingly receiving the system information or preventing the second terminal device from blindingly sending system information not required by the first terminal device. This reduces signaling exchange between the first terminal device and the second terminal device, reduces signaling overheads, and avoids resource waste.

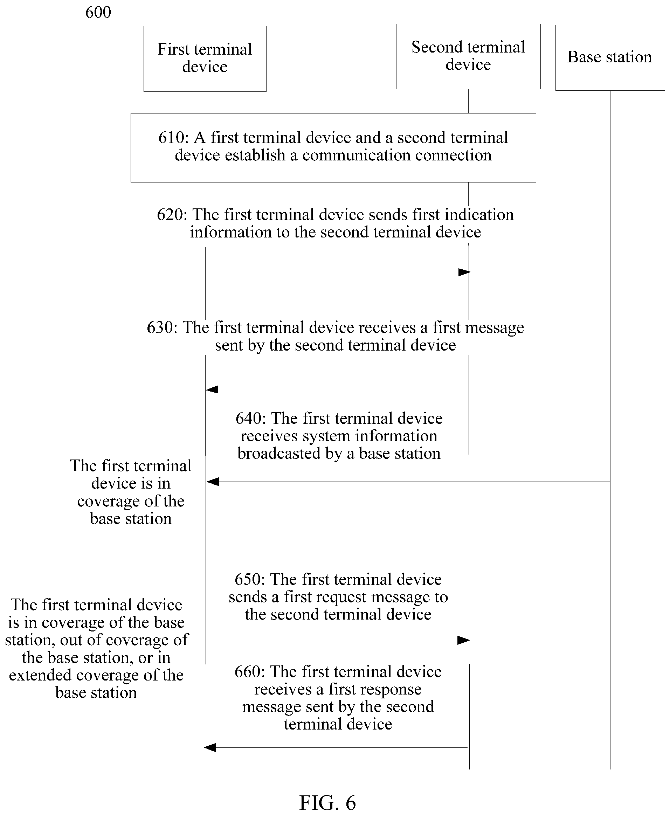

FIG. 6 is a schematic flowchart of a system information transmission method 600 according to an embodiment of the present invention.

610: A first terminal device and a second terminal device establish a communication connection.

620: The first terminal device sends first indication information to the second terminal device.

Optionally, in some embodiments, the first indication information is used to indicate a capability supported by the first terminal device or system information SI type required by the first terminal device.

630: The first terminal device receives a first message sent by the second terminal device.

Optionally, in some embodiments, the first message may include instruction information instructing the first terminal device to receive SI.

Optionally, in some embodiments, the first message may further include information indicating at least one of the following events:
the system information changes;
an EAB parameter changes;
there is an ETWS primary notification;
there is an ETWS secondary notification;
there is a CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

Optionally, in some embodiments, the first message may alternatively be a paging message, and the paging message may include at least one of the following paging messages:
a paging message indicating that the system information changes;
a paging message indicating that an EAB parameter changes;
a paging message indicating that there is an ETWS primary notification;
a paging message indicating that there is an ETWS secondary notification; and
a paging message indicating that there is a CMAS notification.

Optionally, in some embodiments, the first message may further include first identification information, and the first identification information is a cell identifier and/or SystemInfoValueTag.

640: When the first terminal device is a terminal device in coverage of a base station, the first terminal device receives system information broadcast by the base station.

650: The first terminal device sends a first request message to the second terminal device.

Optionally, the first request message is used to request the second terminal device to send system information SI required by the first terminal device to the first terminal device.

660: The first terminal device receives a first response message sent by the second terminal device.

It should be understood that the first terminal device may be only a first terminal device out of coverage of the base station or in extended coverage of the base station, or may be all first terminal devices in coverage of the base station, out of coverage of the base station, or in extended coverage of the base station.

To be specific, a first terminal device out of coverage of the base station or in extended coverage of the base station may use the second terminal device as a relay device and send the first message to the second terminal device, or all first terminal devices use the second terminal device as a relay device and send the first request message to the second terminal device.

Optionally, in some embodiments, the first response message includes the system information SI that is required by the first terminal device and that is determined by the second terminal device based on the first indication information sent by the first terminal device.

The procedure of the method 600 shown in FIG. 6 is approximately similar to that of the method 500. A difference is that the first terminal device in the method 600 needs to send the first indication information to the second terminal device. The first indication information is information such as information about the capability supported by the first terminal device or information about the system information type required by the first terminal device. The second terminal device may determine, based on the information such as the capability supported by the first terminal device or the system information type required by the first terminal device, the system information required by the first terminal device, to prevent the second terminal device from sending system information not required by the first terminal device to the first terminal device.

In this embodiment of the present invention, the first terminal device may receive the first message, to determine whether the first terminal device needs to receive the system information, and the first terminal device may send the first indication information to the second terminal device, so that the second terminal device determines the system information required by the first terminal device, thereby preventing the first terminal device from blindingly receiving the system information or preventing the second terminal device from blindingly sending the system information not required by the first terminal device. This reduces signaling exchange between the first terminal device and the second terminal device, reduces signaling overheads, and avoids resource waste.

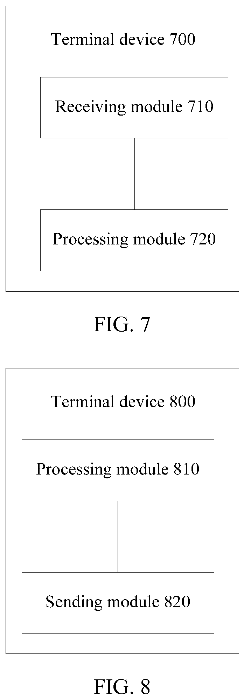

The foregoing describes the method embodiments of the embodiments of the present invention in detail with reference to FIG. 2 to FIG. 6, and the following describes terminal device embodiments of the embodiments of the present invention in detail with reference to FIG. 7 to FIG. 9. It should be understood that the terminal device embodiments correspond to the method embodiments. For similar descriptions, refer to the method embodiments.

FIG. 7 is a schematic block diagram of a terminal device 700 according to an embodiment of the present invention. As shown in FIG. 7, the terminal device 700 includes:
a receiving module 710, configured to receive a first message sent by a second terminal device, where the first message is used by the terminal device 700 to determine whether system information SI needs to be received, and the terminal device 700 communicates with a base station via the second terminal device; and
a processing module 720, configured to receive the SI based on the first message.

Optionally, in some embodiments, the first message includes instruction information instructing the terminal device 700 to receive the SI.

Optionally, in some embodiments, the first message may further include information indicating at least one of the following events:
the system information changes;
an extended access barring EAB parameter changes;
there is an earthquake and tsunami warning system ETWS primary notification;
there is an earthquake and tsunami warning system ETWS secondary notification;
there is a commercial mobile alert service CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

Optionally, in some embodiments, the first message may alternatively be a paging message, and the paging message may include at least one of the following paging messages:
a paging message indicating that the system information changes;
a paging message indicating that an extended access barring EAB parameter changes;
a paging message indicating that there is an earthquake and tsunami warning system ETWS primary notification;
a paging message indicating that there is an earthquake and tsunami warning system ETWS secondary notification; and
a paging message indicating that there is a commercial mobile alert service CMAS notification.

Optionally, in some embodiments, the first message further includes first identification information, and the first identification information is a cell identifier and/or SystemInfoValueTag.

Optionally, in some embodiments, the terminal device 700 further includes:
The processing module 720 is further configured to check whether the first identification information in the first message and first identification information prestored by the terminal device 700 are consistent.

Optionally, in some embodiments, the receiving module 710 is further configured to receive the SI when the first identification information in the first message and the first identification information prestored by the terminal device 700 are inconsistent.

Optionally, in some embodiments, the terminal device 700 further includes:
a sending module 730, configured to send a first request message to the second terminal device, where the first request message is used to request the SI.

Optionally, in some embodiments, the receiving module 710 is specifically configured to receive a first response message sent by the second terminal device, where the first response message includes the SI.

Optionally, in some embodiments, the first request message includes first indication information, and the first indication information indicates a capability supported by the first terminal device or a system information type required by the first terminal device.

Optionally, in some embodiments, if the terminal device 700 is in coverage of the base station, the receiving module 710 is further configured to receive the SI broadcast by the base station.

Optionally, in some embodiments, the sending module 730 is further configured to send coverage status information to the second terminal device, where the coverage status information is used to indicate that the terminal device 700 is in coverage of the base station, the terminal device 700 is out of coverage of the base station, or the terminal device 700 is in extended coverage of the base station.

It should be understood that the terminal device 700 according to this embodiment of the present invention may correspond to the first terminal device in the embodiments of the present invention. The foregoing and other operations and/or functions of the modules of the terminal device 700 separately implement the corresponding procedures of the methods in FIG. 2 to FIG. 6. For the purpose of conciseness, details are not described herein again.

FIG. 8 is a schematic structural diagram of a terminal device 800 according to an embodiment of the present invention. As shown in FIG. 8, the terminal device 800 includes:
a processing module 810, configured to generate a first message, where the first message is used by a first terminal device to determine whether system information SI needs to be received, and the first terminal device can communicate with a base station via the second terminal device; and
a sending module 820, configured to send the first message to the first terminal device.

Optionally, in some embodiments, the first message includes instruction information instructing the first terminal device to receive the SI.

Optionally, in some embodiments, the first message further includes information indicating at least one of the following events:
the system information changes;
an EAB parameter changes;
there is an ETWS primary notification;
there is an ETWS secondary notification;
there is a CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

Optionally, in some embodiments, the first message may alternatively be a paging message, and the paging message may include at least one of the following paging messages:
a paging message indicating that the system information changes;
a paging message indicating that an extended access barring EAB parameter changes;
a paging message indicating that there is an earthquake and tsunami warning system ETWS primary notification;
a paging message indicating that there is an earthquake and tsunami warning system ETWS secondary notification; and
a paging message indicating that there is a commercial mobile alert service CMAS notification.

Optionally, in some embodiments, the first message may further include first identification information, and the first identification information is a cell identifier and/or SystemInfoValueTag.

Optionally, in some embodiments, the terminal device 800 further includes:
a receiving module 830, configured to receive a first request message sent by the first terminal device, where the first request message is used to request the SI.

Optionally, in some embodiments, the sending module 820 is specifically configured to send a first response message to the first terminal device, where the first response message includes the SI.

Optionally, in some embodiments, the first request message includes first indication information, and the first indication information is used to indicate a capability supported by the first terminal device or a system information type required by the first terminal device.

Optionally, in some embodiments, the receiving module 830 is further configured to receive coverage status information sent by the first terminal device. The coverage status information is used to indicate that the first terminal device is in coverage of the base station, out of coverage of the base station, or in extended coverage of the base station.

It should be understood that the terminal device 800 according to this embodiment of the present invention may correspond to the second terminal device in the embodiments of the present invention. The foregoing and other operations and/or functions of the modules of the terminal device 800 separately implement the corresponding procedures of the methods in FIG. 2 to FIG. 6. For the purpose of conciseness, details are not described herein again.

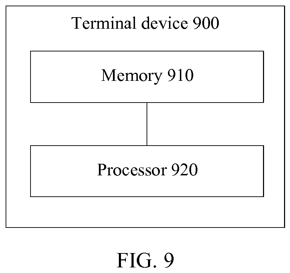

FIG. 9 is a schematic structural diagram of a terminal device 900 according to an embodiment of the present invention. As shown in FIG. 9, the terminal device 900 includes a memory 910 and a processor 920. The memory 910 and the processor 920 communicate with each other and transfer a control and/or data signal by using an internal connection path.

The memory 910 is configured to store program code.

The processor 920 is configured to invoke the program code to implement the methods in the embodiments of the present invention.

In an embodiment of the present invention, the processor 920 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The embodiments of the present invention provide a computer-readable medium, configured to store code of a computer program. The computer program includes an instruction used to perform the system information transmission methods according to the embodiments of the present invention in FIG. 2 to FIG. 6. The readable medium may be a read-only memory (read-only memory, ROM) or a random access memory (random access memory, RAM). This is not limited in this embodiment of the present invention.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system information transmission method, wherein the method comprises:
receiving, by a first terminal device, a first message sent by a second terminal device, wherein the first message is used by the first terminal device to determine whether system information SI needs to be received, and the first terminal device can communicate with a base station via the second terminal device; and
receiving, by the first terminal device, the SI based on the first message.

2. The method according to claim 1, wherein the first message comprises instruction information instructing the first terminal device to receive the SI.

3. The method according to claim 1, wherein the first message comprises information indicating at least one of the following events:
the system information changes;
an extended access barring EAB parameter changes;
there is an earthquake and tsunami warning system ETWS primary notification;
there is an earthquake and tsunami warning system ETWS secondary notification;
there is a commercial mobile alert service CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

4. The method according to claim 1, wherein the first message is a paging message, and the paging message is at least one of the following paging messages:
a paging message indicating that the system information changes;
a paging message indicating that an extended access barring EAB parameter changes;
a paging message indicating that there is an earthquake and tsunami warning system ETWS primary notification;
a paging message indicating that there is an earthquake and tsunami warning system ETWS secondary notification; and
a paging message indicating that there is a commercial mobile alert service CMAS notification.

5. The method according to claim 1, wherein the first message comprises first identification information, and the first identification information is a cell identifier and/or SystemInfoValueTag.

6. The method according to claim 5, wherein the method further comprises:
checking, by the first terminal device, whether the first identification information in the first message and first identification information prestored by the first terminal device are consistent; and
if the first identification information in the first message and the first identification information prestored by the first terminal device are inconsistent, receiving, by the first terminal device, the SI.

7. The method according to any one of claims 1 to 6, wherein the receiving, by the first terminal device, the SI based on the first message comprises:
sending, by the first terminal device, a first request message to the second terminal device based on the first message, wherein the first request message is used to request the SI; and
receiving, by the first terminal device, a first response message sent by the second terminal device, wherein the first response message comprises the SI.

8. The method according to claim 7, wherein the first request message comprises first indication information, and the first indication information indicates a capability supported by the first terminal device or a system information type required by the first terminal device.

9. The method according to any one of claims 1 to 6, wherein if the first terminal device is in coverage of the base station,
the receiving, by the first terminal device, the SI based on the first message comprises:
receiving, by the first terminal device based on the first message, the SI broadcast by the base station.

10. The method according to any one of claims 1 to 9, wherein the method further comprises:
sending, by the first terminal device, coverage status information to the second terminal device, wherein the coverage status information is used to indicate that the first terminal device is in coverage of the base station, the first terminal device is out of coverage of the base station, or the first terminal device is in extended coverage of the base station.

11. A system information transmission method, wherein the method comprises:
generating, by a second terminal device, a first message, wherein the first message is used by a first terminal device to determine whether system information SI needs to be received, and the first terminal device can communicate with a base station via the second terminal device; and
sending, by the second terminal device, the first message to the first terminal device.

12. The method according to claim 11, wherein the first message comprises instruction information instructing the first terminal device to receive the SI.

13. The method according to claim 11, wherein the first message comprises information indicating at least one of the following events:
the system information changes;
an extended access barring EAB parameter changes;
there is an earthquake and tsunami warning system ETWS primary notification;
there is an earthquake and tsunami warning system ETWS secondary notification;
there is a commercial mobile alert service CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

14. The method according to claim 11, wherein the first message is a paging message, and the paging message is at least one of the following paging messages:
a paging message indicating that the system information changes;
a paging message indicating that an extended access barring EAB parameter changes;
a paging message indicating that there is an earthquake and tsunami warning system ETWS primary notification;
a paging message indicating that there is an earthquake and tsunami warning system ETWS secondary notification; and
a paging message indicating that there is a commercial mobile alert service CMAS notification.

15. The method according to claim 11, wherein the first message comprises first identification information, and the first identification information is a cell identifier and/or SystemInfoValueTag.

16. The method according to any one of claims 11 to 15, wherein the method further comprises:
receiving, by the second terminal device, a first request message sent by the first terminal device, wherein the first request message is used to request the SI; and
sending, by the second terminal device, a first response message to the first terminal device, wherein the first response message comprises the SI.

17. The method according to claim 16, wherein the first request message comprises first indication information, and the first indication information indicates a capability supported by the first terminal device or a system information type required by the first terminal device.

18. The method according to any one of claims 11 to 17, wherein the method further comprises:
receiving, by the second terminal device, coverage status information sent by the first terminal device, wherein the coverage status information is used to indicate that the first terminal device is in coverage of the base station, out of coverage of the base station, or in extended coverage of the base station.

19. A terminal device, wherein the terminal device comprises:
a receiving module, configured to receive a first message sent by a second terminal device, wherein the first message is used by the terminal device to determine whether system information SI needs to be received, and the terminal device communicates with a base station via the second terminal device; and
a processing module, configured to receive the SI based on the first message.

20. The terminal device according to claim 19, wherein the first message comprises instruction information instructing the terminal device to receive the SI.

21. The terminal device according to claim 19, wherein the first message comprises information indicating at least one of the following events:
the system information changes;
an extended access barring EAB parameter changes;
there is an earthquake and tsunami warning system ETWS primary notification;
there is an earthquake and tsunami warning system ETWS secondary notification;
there is a commercial mobile alert service CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

22. The terminal device according to claim 19, wherein the first message is a paging message, and the paging message is at least one of the following paging messages:
a paging message indicating that the system information changes;
a paging message indicating that an extended access barring EAB parameter changes;
a paging message indicating that there is an earthquake and tsunami warning system ETWS primary notification;
a paging message indicating that there is an earthquake and tsunami warning system ETWS secondary notification; and
a paging message indicating that there is a commercial mobile alert service CMAS notification.

23. The terminal device according to claim 19, wherein the first message comprises first identification information, and the first identification information is a cell identifier and/or SystemInfoValueTag.

24. The terminal device according to claim 23, wherein the processing module is further configured to check whether the first identification information in the first message and first identification information prestored by the terminal device are consistent; and
the receiving module is further configured to receive the SI when the first identification information in the first message and the first identification information prestored by the terminal device are inconsistent.

25. The terminal device according to any one of claims 19 to 24, wherein the terminal device further comprises:
a sending module, configured to send a first request message to the second terminal device based on the first message, wherein the first request message is used to request the SI, wherein
the receiving module is specifically configured to receive a first response message sent by the second terminal device, wherein the first response message comprises the SI.

26. The terminal device according to claim 25, wherein the first request message comprises first indication information, and the first indication information indicates a capability supported by the first terminal device or a system information type required by the first terminal device.

27. The terminal device according to any one of claims 19 to 24, wherein if the first terminal device is in coverage of the base station,
the receiving module is further configured to receive the SI broadcast by the base station.

28. The terminal device according to any one of claims 19 to 27, wherein the sending module is further configured to send coverage status information to the second terminal device, wherein the coverage status information is used to indicate that the terminal device is in coverage of the base station, the terminal device is out of coverage of the base station, or the terminal device is in extended coverage of the base station.

29. A terminal device, wherein the terminal device comprises:
a processing module, configured to generate a first message, wherein the first message is used by a first terminal device to determine whether system information SI needs to be received, and the first terminal device can communicate with a base station via the second terminal device; and
a sending module, configured to send the first message to the first terminal device.

30. The terminal device according to claim 29, wherein the first message comprises instruction information instructing the first terminal device to receive the SI.

31. The terminal device according to claim 29, wherein the first message comprises information indicating at least one of the following events:
the system information changes;
an extended access barring EAB parameter changes;
there is an earthquake and tsunami warning system ETWS primary notification;
there is an earthquake and tsunami warning system ETWS secondary notification;
there is a commercial mobile alert service CMAS notification;
the second terminal device is performing or has completed cell reselection;
the second terminal device is performing or has completed intra-frequency handover;
the second terminal device is performing or has completed inter-frequency handover;
the second terminal device is performing or has completed inter-RAT handover; and
a system information block SIB 1 broadcast by the base station changes.

32. The terminal device according to claim 29, wherein the first message is a paging message, and the paging message is at least one of the following paging messages:
a paging message indicating that the system information changes;
a paging message indicating that an extended access barring EAB parameter changes;
a paging message indicating that there is an earthquake and tsunami warning system ETWS primary notification;
a paging message indicating that there is an earthquake and tsunami warning system ETWS secondary notification; and
a paging message indicating that there is a commercial mobile alert service CMAS notification.

33. The terminal device according to claim 29, wherein the first message further comprises first identification information, and the first identification information is a cell identifier and/or SystemInfoValueTag.

34. The terminal device according to any one of claims 29 to 33, wherein the terminal device further comprises:
a receiving module, configured to receive a first request message sent by the first terminal device, wherein the first request message is used to request the SI, wherein
the sending module is specifically configured to send a first response message to the first terminal device, wherein the first response message comprises the SI.

35. The terminal device according to claim 34, wherein the first request message comprises first indication information, and the first indication information indicates a capability supported by the first terminal device or a system information type required by the first terminal device.

36. The terminal device according to any one of claims 29 to 35, wherein the receiving module is further configured to receive coverage status information sent by the first terminal device, wherein the coverage status information is used to indicate that the first terminal device is in coverage of the base station, out of coverage of the base station, or in extended coverage of the base station.
